# EUROPEAN PATENT SPECIFICATION

(11) **EP 0 645 722 B1**
(45) Date of publication and mention of the grant of the patent: **04.08.1999**
(21) Application number: 94650026.1
(22) Date of filing: 28.09.1994
(51) Int. Cl.: G06F 17/30

(54) **A data processing apparatus**
Datenverarbeitungsvorrichtung
Appareil de traitement de données

(30) Priority: 28.09.1993 IE 930721
(43) Date of publication of application: 29.03.1995
(73) Proprietor: L & P SYSTEMS LIMITED, Dublin 4 (IE)
(72) Inventor: Langford, Gerald, Dublin 13 (IE); Lamont, Desmond, Dublin 6W (IE); Cowley, Shane, County Dublin (IE); McFadden, Bernard, Greystones, County Wicklow (IE); Costelloe, Gerardine, Dublin 18 (IE)
(74) Representative: O'Connor, Donal Henry

(56) References cited:
- US-A- 5 187 786
- HEWLETT-PACKARD JOURNAL, vol.41, no.4, August 1990, PALO ALTO US pages 24 - 30 S. MANWEILER : 'HP MAP 3.0 File Transfer, Access, and Management/800'

## Description

The invention relates to a data processing apparatus of the type having a user interface, and central processing unit (CPU) connected to a storage device and to a random access memory. In particular, the invention relates to the technical electronic structure of the data storage device and also to the technical steps carried out by the CPU accessing the storage devices in order to provide the following technical results:-
1. An improved response time, particularly where complex processing must be carried out on a large amount of stored data;
2. improved data processing versatility, whereby the processing operations may be easily changed by a user; and
3. improved data security, whereby stored data may not be easily over-written with incorrect data.

Heretofore, many particular data processing apparatus constructions have been provided in order to improve response time and processing efficiency generally. For example, European Patent Specification No. EP-B1-0074390 (Unisys Corp.) describes a data processing system including caches having fast access times and various processing units communicating with the caches. Such an arrangement is of use in most data processing situations. However, in particular situations where there is a very large amount of data, where very complex processing must take place and where a large amount of versatility must be provided for modification of the processing operations carried out, such an arrangement still does not on its own provide the necessary technical results. An example of the type of situation where this would arise is in data relating to inter-linked units where the processing may relate to individual units or sets of units grouped together according to different criteria. For each individual unit there may be a set of processing operations which must be carried out, this depending on many different variables. In a situation where there is a large number of variables and complex processing is required in addition to there being a large amount of data, unless extremely expensive computer systems (such as massively parallel systems) are used the response time would be inadequate using presently available data processing apparatus.

The invention is directed towards providing a construction of data processing apparatus which provides the above-mentioned technical results without the need for a very powerful and expensive computer installation. An important point is that the invention relates to the technical steps which are carried out to achieve these technical results, and not to the nature of the data being processed. Where a mention is made in the specification of data of a particular nature, this is given for illustration only.

The invention is characterised in that the central processing unit comprises means for:-
(a) receiving at the user interface an instruction for output of data, the instruction including names of data files within a hierarchical structure in the storage device of linked group, sub-group, status and unit files, the structure also comprising category files linked to upper and lower level data files and wherein each category file has a set of codes in which:-
   each code is linked with at least one unit file;
   there are a plurality of sub-sets of codes, each sub-set being linked with a status file; and
   all codes are linked with all higher-level data files linked to the category file in the structure;
(b) retrieving a category file linked to the data files addressed in the instructions;
(c) writing the category file to a category array structure in the memory having a row and column capacity corresponding to the codes of the category files;
(d) determining by way of the addressed data files and the manner of their being linked to the category file relevant codes in the category array structure, and for each such code in turn identifying a formula file addressable by that code, and writing the formula file to a formula file array structure in the memory having a row and column memory capacity corresponding to the formula files, said formula file array structure having been previously retrieved from the storage device;
(e) automatically processing program code in each row of the formula file array structure, and writing a generated interim result to a corresponding row of a result array structure having a row corresponding to each row of the formula file array structure;
(f) automatically monitoring inter-relationships of program commands in the rows of the formula file array structure to detect an indicator of a final result;
(g) reading the result in the indicated row of the results array structure as the final result for that category file code; and
(h) generating a final result by processing all category file code final results.

In one embodiment, the central processing unit processes data according to the commands in the formula file array structure and parameter values stored in the associated category file.

Preferably, the structure of the storage device includes a real-time data file for reception of real-time data from an external source, said real-time data file being linked directly to a group file.

In another embodiment, the central processing unit comprises means for accessing real-time data in the realtime data file according to commands in a relevant formula file and for writing the real-time data to the memory and subsequently sorting the data according to a time field associated with each field of real-time data and subsequently selecting relevant real-time data according to the sorting operations and the formula file commands.

Ideally, the structure further comprises detailed data files storing additional and non real-time data, said detailed data files being linked directly to unit files within the same hierarchical level as the unit files, and said central processing unit retrieves data from the detailed data files via the directly linked unit files.

In one embodiment, the category array structure comprises rows having a width in the range of 2 to 5 bytes.

The invention will be more clearly understood from the following description of some preferred embodiments thereof, given by way of example only with reference to the accompanying drawings in which:-
Fig. 1 is a schematic representation of a data processing apparatus of the invention;
Fig. 2 is a schematic representation of the structure of a storage device of the apparatus; and
Fig. 3 is a diagram showing the manner in which processing operations are carried out.

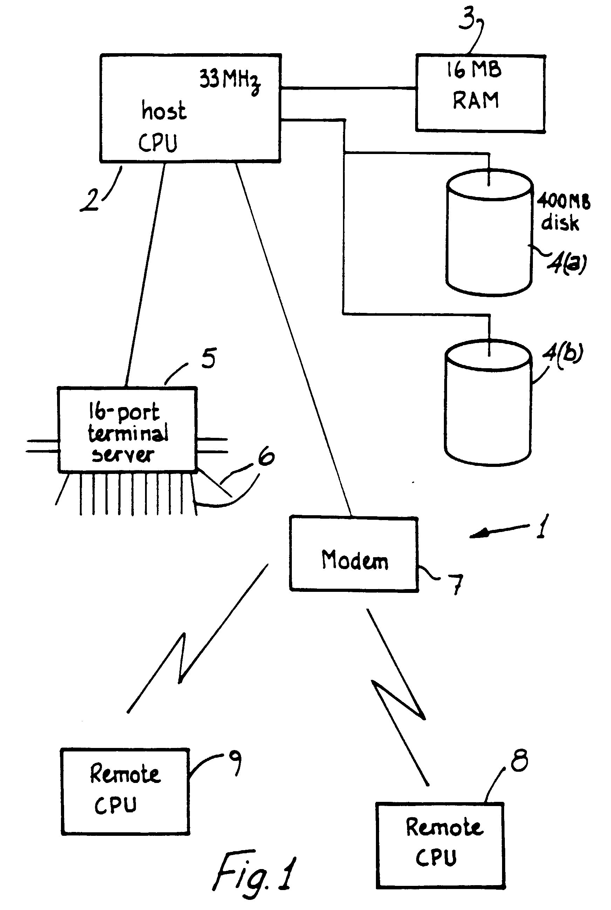

A data processing apparatus 1 of the invention is shown in Fig. 1. The apparatus comprises a host central processing unit (CPU) 2 which in this embodiment is of the Intel 486™ type operating at 33 MHz. The CPU 2 is connected to a random access memory (RAM) 3 having a 16 MB capacity. In addition, the CPU 2 is connected to fixed disks, two of which are shown and indicated by the numerals 4(a) and 4(b). The total capacity of the disks is 400 MB. For access to the CPU 2, the apparatus 1 comprises a 16-port terminal server 5 having links 6 connected to the various terminals. For remote access, the apparatus 1 comprises a modem 7 which is constructed for communication with remote CPUs indicated by the numerals 8 and 9.

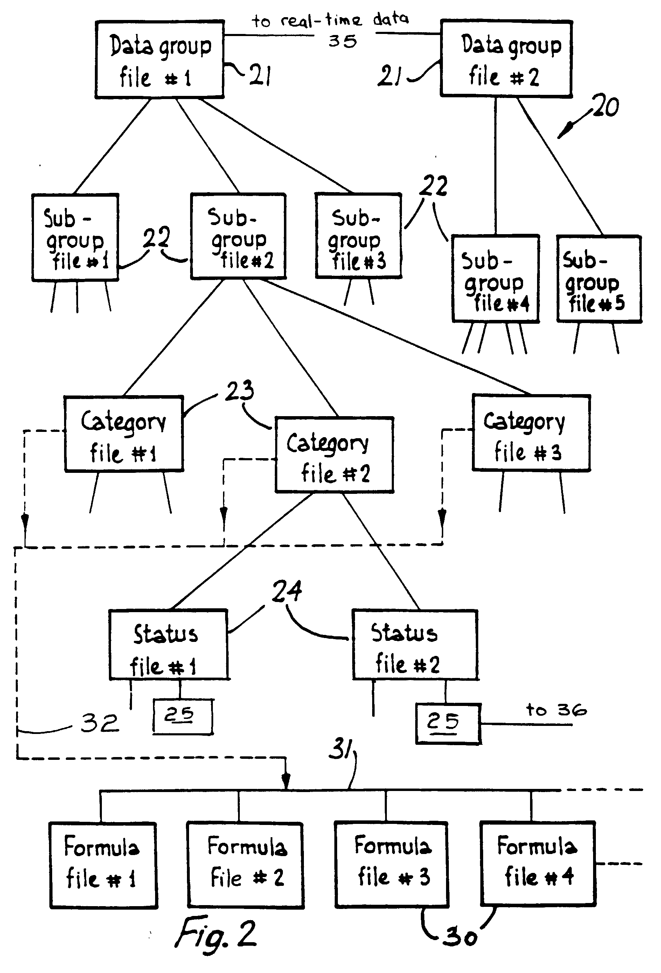

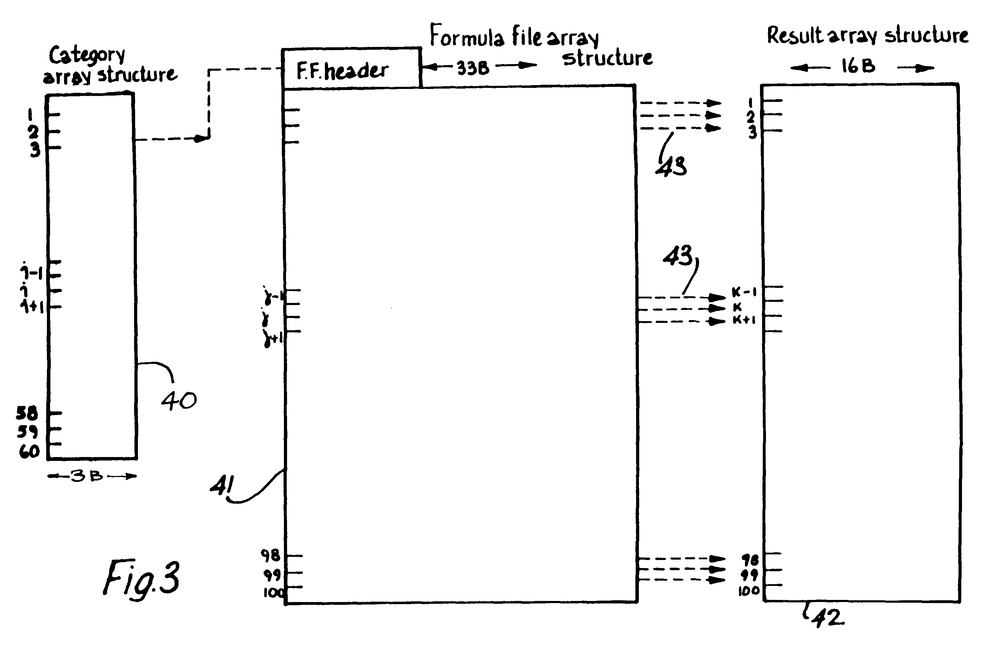

The important aspects of the invention relate to the manner in which data and program structures are stored on the disks 4 and in which the CPU 2 is programmed to utilise the memory 3 to carry out technical operations to provide the desired technical results. These are described in detail below with reference to Figs. 2 and 3. In these drawings, Fig. 2 shows how program commands are stored in relation to a hierarchical data structure for fast program command selection, versatility and data security. Fig. 3 illustrates the manner in which the memory 3 is utilised in a manner whereby very complex processing is broken down to provide a fast response time.

Referring in particular to Fig. 2, the data and program structure 20 on the disks 4 is illustrated. As stated above, the invention relates to the technical features such as the data structure, the program structure, and the way these are interconnected and also to the technical aspects of the manner in which data is retrieved and processed in memory. The invention does not therefore relate to a particular nature of data, however, for illustrative purposes, examples are given where the data generally relates to actuarial data processing. This will help in understanding the invention.

The structure 20 comprises a number of data group files 21 which are the highest level data files in a hierarchial data file arrangement. For example, a group file 21 may store data relating to a pension fund generally, such as the pension fund for a particular retail distribution group. At the next level the structure 20 comprises a plurality of data sub-group files 22, each of which is subsidiary to a group file 21. A sub-group file 22 may store data relating to a particular set of employees in a pension fund such as the employees in a particular premises in a retail chain. At the next level, there is a set of category files 23. These files are very important as they relate directly to the manner in which data processing is to be carried out. An important aspect of the invention is the fact that the category files 23 provide a link between the data and processing programs, as described below. The structure 20 further comprises a set of data status files 24 each of which are subsidiary to a particular category file 23. An example of a status file 24 is one relating to active members of a pension fund. Finally, there is a set of data unit files 25 which are subsidiary to the status files 24. A unit file 25 relates to one particular set of data or the smallest possible record. In this example, each unit file may relate to a particular member or individual in a pension fund.

An important aspect of the structure 20 is that each unit file 25 has a set of result fields, these fields containing the necessary data which must be outputted by the apparatus 1. Another important aspect is that each category file 23 stores a set of codes, each addressing one of a number of formula files 30. The formula files 30 are illustrated at the bottom of Fig. 2, being connected by a bi-directional link 31. The interrupted lines 32 in Fig. 2 show the manner in which formula files 30 are selected. Each of the formula files 30 stores up to 100 lines of processing commands. Each of the category files 23 stores up to 60 category file codes, each code being an address for a formula file 30. For each code in a category file 23 there is one or more associated unit file 25. This allows for all or a subset of the 60 codes in each of the category files 23 to be used in any particular processing operation. For example, if the name of a group file 21 is received at an interface, then all codes in the relevant category files 23 would be used. This would lead to an extremely large amount of processing because there may be a large number of category files 23 associated with the particular group file 21. If the names for both a group file 21 and also a sub-group file 22 are received, the number of category files 23 is considerably reduced, and the number of codes used in the processing is reduced accordingly. Further, if the address for a status file 24 is received, there is only one category file 23 involved, and in addition the number of category codes which are involved in the processing operation need not necessarily be the full number, 60. This is because the category file 23 stores an indicator of the codes associated with each status file 24. For example, codes 01 to 11 may relate to a status file 24 for normal quotes for pension fund processing, codes 12 to 24 may relate to a status file 24 for early retirement quotes, codes 25 to 43 may relate to a status file 24 for deferred/refund quotes, and codes 44 to 60 may relate to a status file 24 for miscellaneous quotes. Finally, each unit file 25 further breaks this down to a particular smaller set of codes in a category file 23.

In addition to storing codes for the link 32, each category file 23 stores parameter values for use by commands in the formula files 30.

In a typical application, there may be thousands of unit files 25, hundreds of status files 24 and corresponding smaller numbers of each of the higher level files 23, 22 and 21. Because of the data and program structure 20 each file need only store a relatively small amount of data, this data including pointers to other files, and to the contents of other files. This is described in more detail below.

The above description sets out the core parts of the structure 20. The structure 20, however, further comprises two additional types of files. One is a file for real-time general data continually received from sensors, broadcasts, etc. Such a file is indicated by the numeral 35 and is linked directly to all of the highest-level files, namely the group files 21. The real-time data files should be regarded as being outside the hierarchial links, being data sources accessible only by the group files 21. The second type are detailed data files 36. These are for storage of non real-time data related to the data in the unit files 25. These are simply linked directly to the unit files 25 and do not provide a new level in the hierarchical arrangement and should be regarded as being within the same level as the unit files 25.

These two types of files provide for adding of data outside of the scope of the core files in a simple manner without changing the manner in which the CPU2 utilises the memory 3 for data processing.

Referring now to Fig. 3, the manner in which the CPU 2 operates is illustrated with reference to pre-defined array structures stored on the disks 4 and which are retrieved for use in the memory 3. There is a category array 40 which has 60 rows, each row being 3 bytes wide and generally is preferably in the range 2-5 bytes for fast addressing. In addition, there is a formula file array structure 41 and a result array structure 42. The formula file array structure 41 is 100 rows deep, each row being 33 bytes wide. The result array structure 42 is also 100 rows deep, each row being 16 bytes wide. The representation of these array structures in Fig. 3 helps to illustrate the manner in which the CPU operates in conjunction with the data and program structure 20 to achieve the necessary technical results.

The CPU 2 is activated by receipt from a local or remote terminal of an instruction for generation of particular data processing results. In this example, the enquiry may be to generate an early retirement quote for a particular member of a pension fund. In this case, names for the group file 21, the sub-group file 22, the status file 24 and the particular unit file 25 are inputted. The CPU 2 then retrieves the category file 23 which is associated with these names and automatically writes it to the category array structure 40 the latter being initially loaded to memory 3. While doing this, the CPU stores in the memory 3 an indicator of the particular code numbers associated with the user query. This is determined according to the status and unit files identified. In carrying out the data processing, the CPU 2 directly addresses the row in the array structure 40 which stores the first relevant code. This code is read from the (full) array structure 40 and is used for retrieval of the formula file 30 which it identifies. The formula file 30 is then written to the formula file array structure 41, with each line of code being written to the relevant row in the array structure 41.

The program pointer of the CPU 2 then proceeds to read each line of code from the structure 41 in turn and to carry out data processing operations using the commands. It also uses parameter values retrieved from the category file, as addressed by the codes in the array 40. It generates an interim result by writing the result from each row of the structure 41 to the corresponding row of the structure 42. This is indicated by the interrupted lines 43. Each program line may include instructions to read the result of an earlier line and thus, code within the rows of the structure 41 are inter-related. The CPU 2 continuously monitors the code in the array structure 41 for detection of an indicator that a total result has been achieved. When this indicator is detected the result from the corresponding row of the result array structure 42 is read and registered by the CPU 2 as a result for the particular field of the unit file 25. The CPU 2 then writes this result to the relevant field in the unit file 25.

This set of steps is then repeated for each of the appropriate codes in the category array structure 40. To provide the output required by the user, the CPU2 then combines the data in the result fields of the relevant unit files 25. For printing, the CPU 2 writes all desired output data to the memory 3 and also writes a universal print driver. A word processing program automatically converts the print instructions to its own format. Accordingly, different work processing programs can be easily used, each carrying out automatic format conversion.

In the above description, references made to the unit files 25 includes any detailed data files 36 to which they are connected (and are in the same hierarchical level). Where real time data is required for processing, it is retrieved via the link to the relevant group file 21, and items of data are selected from it according to the relevant category file codes. The real time data is written to the memory 3 and automatically sorted according to time fields associated with each field of real-time data. The appropriate items are then selected according to criteria pre-set in the relevant formula file 30. It will be appreciated that by linking the real-time data in this manner, little storage capacity is required and there is quick access for all levels. It also ensures that out-of-date data is not used in processing.

It will be appreciated that the link which the category files 23 provide to the program commands, and utilisation of the arrays 40, 41 and 42 provide a very fast response time. This time may be of the order of 30 - 40 ms, even where extensive and complex processing is required. This is because relevant data is quickly identified and retrieved, and processing tasks are effectively broken down in a simple manner. Further, the structure 20 provides versatility because parameter values for all data may be changed by direct access to the category files. For example, a parameter value change in a line of a category file 23 affects all higher and lower-level data immediately. Further, data may be easily changed by redefining inter-relationships of the data files 21, 22, 24 and 25 in the structure 20 as set with the category and by their links files 23. Program changes can also be easily made by access to the relevant formula files - a single change affecting all data. Excellent data security is achieved by the manner in which the data is broken down in different levels of the structure 20, so that access to different levels requiring knowledge of several addresses is required for access.

The example given is relatively simple, however, it is envisaged that much more complex processing may be required. For example, if the lowest level name given in the query is for a sub-group file 22, codes from several different category files 23 are written in turn to the array structure 40 and all codes of each file must be processed in turn. It will be appreciated that if this processing were carried out without the use of the array structures shown in Fig. 3, response times would be very long. Indeed, it is envisaged that the apparatus 1 may carry out several different processes at any one time. Where some of these processes are relatively simple and may relate to only one unit file, the process may be carried out very quickly by immediate identification of the relevant line in the array structure 40, only carrying out the immediately relevant processing and writing it immediately to the unit file 25.

## Claims

1. A data processing apparatus comprising a user interface, a central processing unit (2) connected to a storage device (4) and to a random access memory (3), characterized in that the central processing unit (2) comprising means for :-
(a) receiving at the user interface an instruction for output of data, the instruction including names of data files within a hierarchical structure (20) in the storage device of linked group (21), sub-group (22), status (24) and unit (25) files, the structure also comprising category files (23) linked to upper and lower level data files and wherein each category file (23) has a set of codes in which:-
each code is linked with at least one unit file (25);
there are a plurality of sub-sets of codes, each sub-set being linked with a status file (24); and
all codes are linked with all higher-level data files (21,22) linked to the category file (23) in the structure;
(b) retrieving a category file (23) linked to the data files addressed in the instructions;
(c) writing the category file (23) to a category array structure (40) in the memory (3) having a row and column capacity corresponding to the codes of the category files (23);
(d) determining by way of the addressed data files and the manner of their being linked to the category file (23) relevant codes in the category array structure (40), and for each such code in turn identifying a formula file (30) addressable by that code and writing the formula file (30) to a formula file array structure (41) in the memory (3) having a row and column memory capacity corresponding to the formula files (30), said formula file array structure having been previously retrieved from the storage device;
(e) automatically processing program code in each row (j) of the formula file array structure (41), and writing a generated interim result to a corresponding row (k) of a result array structure (42) having a row corresponding to each row of the formula file array structure (41);
(f) automatically monitoring inter-relationships of program commands in the rows (j) of the formula file array structure (41) to detect an indicator of a final result;
(g) reading the result in the indicated row (k) of the result array structure (42) as the final result for that category file code; and
(h) generating a final result by processing all category file code final results.

2. A data processing apparatus as claimed in claims 1 or 2, wherein the central processing unit (2) processes data according to the commands in the formula file array structure (41) and parameter values stored in the associated category file (23).

3. A data processing apparatus as claimed in claims 1 or 2, wherein the structure (20) of the storage device includes a real-time data file for reception of real-time data from an external source, said real-time data file being linked directly to a group file (21).

4. A data processing apparatus as claimed in claim 3, wherein the central processing unit (2) comprises means for accessing real-time data in the real-time data file (35) according to commands in a relevant formula file (30) and for writing the real-time data to the memory (3) and subsequently sorting the data according to a time field associated with each field of real-time data and subsequently selecting relevant real-time data according to the sorting operations and the formula file commands.

5. A data processing apparatus as claimed in any preceding claim, wherein the structure (20) further comprises detailed data files (36) storing additional and non real-time data, said detailed data files (36) being linked directly to unit files (25) within the same hierarchical level as the unit files (25), and said central processing unit (2) retrieves data from the detailed data files (36) via the directly linked unit files (25).

6. A data processing apparatus as claimed in claim 1, wherein the category array structure (40) comprises rows having a width in the range of 2 to 5 bytes.

## Patentansprüche

1. Datenverarbeitungsvorrichtung, umfassend eine Benutzeroberfläche, eine Zentraleinheit (2), die mit einem Speicherbauelement (4) und mit einem Direktzugriffsspeicher (3) verbunden ist, dadurch gekennzeichnet, daß die Zentraleinheit (2) Mittel umfaßt zum:
a) Empfangen einer Anweisung an der Benutzeroberfläche zur Ausgabe von Daten, wobei die Anweisung Namen von Datendateien in einer in dem Speicherbauelement befindlichen hierarchischen Struktur (20) von Verkettete-Gruppen- (21), Untergruppen- (22), Status- (24) und Einheitsdateien (25) enthält, wobei die Struktur auch Kategoriedateien (23) umfaßt, die mit Datendateien auf oberer und unterer Ebene verkettet sind, und wobei jede Kategoriedatei (23) eine Codemenge hat, wobei:
jeder Code mit wenigstens einer Einheitsdatei (25) verkettet ist;
es eine Mehrzahl von Codeteilmengen gibt, wobei jede Teilmenge mit einer Statusdatei (24) verkettet ist; und
alle Codes mit allen Datendateien (21, 22) auf höherer Ebene verkettet sind, die mit der Kategoriedatei (23) in der Struktur verkettet sind;
b) Auslesen einer Kategoriedatei (23), die mit den in den Anweisungen adressierten Datendateien verkettet ist;
c) Schreiben der Kategoriedatei (23) in eine Kategoriematrixstruktur (40) im Speicher (3) mit einer Zeilen- und Spaltenkapazität, die den Codes der Kategoriedateien (23) entspricht;
d) Bestimmen, anhand der adressierten Datendateien und der Art und Weise ihrer Verkettung mit der Kategoriedatei (23), relevanter Codes in der Kategoriematrixstruktur (40), und aufeinanderfolgendes Identifizieren, für jeden solchen Code, einer Formeldatei (30), die mit diesem Code adressierbar ist, und Schreiben der Formeldatei (30) in eine Formeldatei-Matrixstruktur (41) in dem Speicher (3) mit Zeilen- und Spaltenkapazität, die den Formeldateien (30) entspricht, wobei die genannte Formeldatei-Matrixstruktur zuvor aus dem Speicherbauelement ausgelesen wurde;
e) automatischen Verarbeiten eines Programmcodes in jeder Zeile (j) der Formeldatei-Matrixstruktur (41) und Schreiben eines erzeugten Zwischenergebnisses in eine entsprechende Zeile (k) einer Ergebnismatrixstruktur (42) mit einer Zeile, die jeder Zeile der Formeldatei-Matrixstruktur (41) entspricht;
f) automatischen Überwachen von Wechselbeziehungen der Programmbefehle in den Zeilen (j) der Formeldatei-Matrixstruktur (41), um einen Anzeiger für ein Endergebnis zu erfassen;
g) Lesen des Ergebnisses in der angezeigten Zeile (k) der Ergebnismatrixstruktur (42) als das Endergebnis für diesen Kategoriedateicode; und
h) Erzeugen eines Endergebnisses durch Verarbeiten aller Kategoriedateicode-Endergebnisse.

2. Datenverarbeitungsvorrichtung nach Anspruch 1 oder 2, bei der die Zentraleinheit (2) Daten gemäß den Befehlen in der Formeldatei-Matrixstruktur (41) und Parameterwerten verarbeitet, die in der zugehörigen Kategoriedatei (23) gespeichert sind.

3. Datenverarbeitungsvorrichtung nach Anspruch 1 oder 2, bei der die Struktur (20) des Speicherbauelementes eine Echtzeit-Datendatei zum Empfangen von Echtzeitdaten von einer externen Quelle aufweist, wobei die genannte Echtzeit-Datendatei direkt mit einer Gruppendatei (21) verkettet ist.

4. Datenverarbeitungsvorrichtung nach Anspruch 3, bei der die Zentraleinheit (2) Mittel zum Zugreifen auf Echtzeitdaten in der Echtzeit-Datendatei (35) gemäß Befehlen in einer relevanten Formeldatei (30) und zum Schreiben der Echtzeitdaten in den Speicher (3) und zum nachfolgenden Sortieren der Daten gemäß einem Zeitfeld, das mit jedem Feld von Echtzeitdaten assoziiert ist, und zum nachfolgenden Auswählen relevanter Echtzeitdaten gemäß den Sortiervorgängen und den Formeldateibefehlen umfaßt.

5. Datenverarbeitungsvorrichtung nach einem der vorherigen Ansprüche, bei der die Struktur (20) ferner detaillierte Datendateien (36) umfaßt, die zusätzliche und Nicht-Echtzeitdaten speichert, wobei die genannten detaillierten Datendateien (36) direkt mit Einheitsdateien (25) innerhalb derselben hierarchischen Ebene verkettet ist wie die Einheitsdateien (25), und die genannte Zentraleinheit (2) Daten aus den detaillierten Datendateien (36) über die direkt verketteten Einheitsdateien (25) ausliest.

6. Datenverarbeitungsvorrichtung nach Anspruch 1, bei der die Kategoriematrixstruktur (40) Zeilen mit einer Breite im Bereich von 2 bis 5 Bytes umfaßt.

## Revendications

1. Un dispositif de traitement de données comportant une interface utilisateur, un processeur central (2) connecté à un dispositif de stockage (4) et une mémoire à accès aléatoire (3), caractérisé en ce que le processeur central (2) comporte les moyens suivants :
(a) réception, à l'interface utilisateur, d'une instruction de sortie de données, instruction incluant des noms de fichiers de données au sein d'une structure hiérarchique (20) dans le dispositif de stockage des fichiers chaînés de groupes (21), de sous-groupes (22), de statuts (24) et d'unités (25), la structure comportant de plus des fichiers de catégories (23) chaînés aux fichiers de données des niveaux supérieur et inférieur et dans lesquels chaque fichier de catégories (23) a un jeu de codes dans lequel :
chaque code est chaîné avec au moins un fichier d'unités (25) ;
il existe une pluralité de sous-ensembles de codes, chaque sous-ensemble étant chaîné à un fichier de statuts (24) ; et
tous les codes sont chaînés avec tous les fichiers de données de niveau plus élevé (21,22) chaînés au fichier de catégories (23) dans la structure ;
(b) récupération d'un fichier de catégories (23) chaîné aux fichiers de données adressés dans les instructions ;
(c) écriture du fichier de catégories (23) dans une structure à matrice de catégories (40) dans la mémoire (3) ayant une capacité de rangées et de colonnes qui correspond aux codes des fichiers de catégories (23) ;
(d) détermination, au moyen des fichiers de données adressés et de la manière de leur chaînage au fichier de catégories (23) des codes pertinents dans la structure à matrice de catégories (40), et, pour chaque code de cette nature tour à tour, identification d'un fichier de formules (30) adressable par ce code, et écriture du fichier de formules (30) dans une structure à matrice de fichiers de formules (41) dans la mémoire (3) ayant une capacité de mémoire à rangées et colonnes qui correspond aux fichiers de formules (30), ladite structure à matrice de fichiers de formules ayant au préalable été récupérée à partir du dispositif de stockage ;
(e) traitement automatique des codes de programmes dans chaque rangée (j) de la structure à matrice de fichiers de formules (41), et écriture d'un résultat intermédiaire généré dans une rangée correspondante (k) d'une structure à matrice de résultats (42) ayant une rangée qui correspond à chaque rangée de la structure à matrice de fichiers de formules (41) ;
(f) surveillance automatique des corrélations des commandes de programmes dans les rangées (j) de la structure à matrice de fichiers de formules (41) pour détecter un indicateur d'un résultat final ;
(g) lecture du résultat dans la rangée indiquée (k) de la structure à matrice de résultats (42) comme résultat final pour ce code de fichier de catégories ; et
(h) génération d'un résultat final en traitant tous les résultats finaux des codes de fichiers de catégories.

2. Un dispositif de traitement de données tel que revendiqué à la revendication 1 ou 2 [sic], dans lequel le processeur central (2) traite les données conformément aux commandes qui se trouvent dans la structure à matrice de fichiers de formules (41) et les valeurs de paramétrage qui sont stockées dans le fichier de catégories associé (23).

3. Un dispositif de traitement de données tel que revendiqué à la revendication 1 ou 2, dans lequel la structure (20) du dispositif de stockage inclut un fichier de données en temps réel pour la réception des données en temps réel provenant d'une source extérieure, ledit fichier de données en temps réel étant directement chaîné à un fichier de groupes (21).

4. Un dispositif de traitement de données tel que revendiqué à la revendication 3, dans lequel le processeur central (2) comporte un moyen d'accès aux données en temps réel dans le fichier de données en temps réel (35) conformément à des commandes dans un fichier de formules pertinentes (30) et pour écrire les données en temps réel dans la mémoire (3), puis pour trier ensuite les données conformément à une zone temporelle associée à chaque zone de données en temps réel et pour choisir ensuite des données en temps réel pertinentes conformément aux opérations de tri et aux commandes du fichier de formules.

5. Un dispositif de traitement de données tel que revendiqué à l'une quelconque des revendications précédentes, dans lequel la structure (20) comporte de plus des fichiers de données détaillées (36) qui stockent des données additionnelles et non en temps réel, lesdits fichiers de données détaillées (36) étant chaînés directement aux fichiers d'unités (25) dans le même niveau hiérarchique que les fichiers d'unités (25), et ledit processeur central (2) récupère des données à partir des fichiers de données détaillées (36) par l'intermédiaire des fichiers d'unités chaînés directement (25).

6. Un dispositif de traitement de données tel que revendiqué à la revendication 1, dans lequel la structure à matrice de catégories (40) comporte des rangées ayant une largeur dans la plage de 2 à 5 octets.
